# EUROPEAN PATENT SPECIFICATION

(11) **EP 4 480 588 B1**
(45) Date of publication and mention of the grant of the patent: **21.10.2026**
(21) Application number: 24180646.2
(22) Date of filing: 07.06.2024
(51) Int. Cl.: B04C 5/04, B01J 8/00, B04C 9/00

(54) **CYCLONE SEPARATOR, THERMAL SYSTEM AND USE THEREOF FOR GAS-SOLID SEPARATION**
ZYKLONABSCHEIDER, THERMISCHES SYSTEM UND VERWENDUNG DERSELBEN ZUR GAS-FESTSTOFF-TRENNUNG
SÉPARATEUR CYCLONIQUE, SYSTÈME THERMIQUE ET UTILISATION DE CELUI-CI POUR LA SÉPARATION GAZ-SOLIDE

(30) Priority: 21.06.2023 FI 20235700
(43) Date of publication of application: 25.12.2024
(73) Proprietor: Valmet Technologies Oy, 02150 Espoo (FI)
(72) Inventor: HILJANEN, Juha, 33900 Tampere (FI); LEHTONEN, Pekka, 33900 Tampere (FI)
(74) Representative: Berggren Oy

(56) References cited:
- DE-C2- 4 136 935
- US-B2- 7 316 564
- US-B2- 8 834 800

## Description

### Technical field

The invention relates to thermal systems, such as pyrolysis reactors, gasification reactors, and boilers including circulating fluidized bed boilers and bubbling fluidized bed boilers. The invention relates to cyclones suitable for such systems. The invention relates to cyclones suitable for separating solid material from a mixture of the solid material and a gaseous substance.

### Background

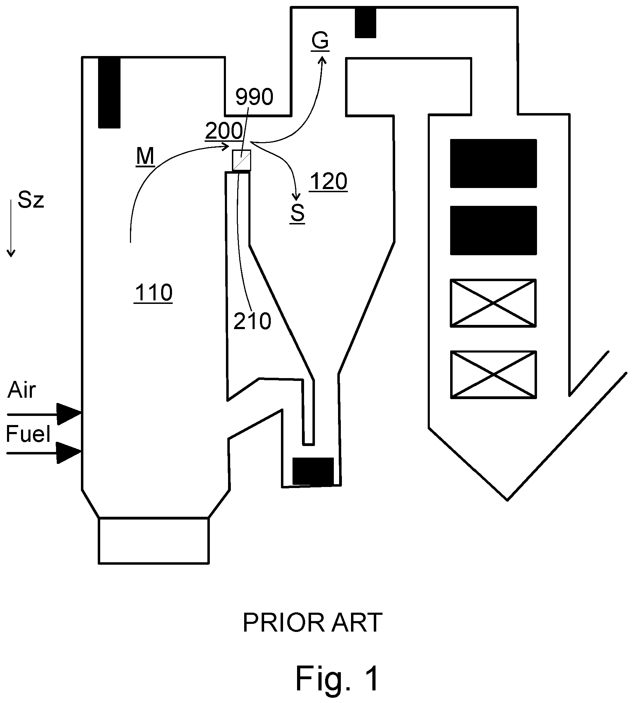

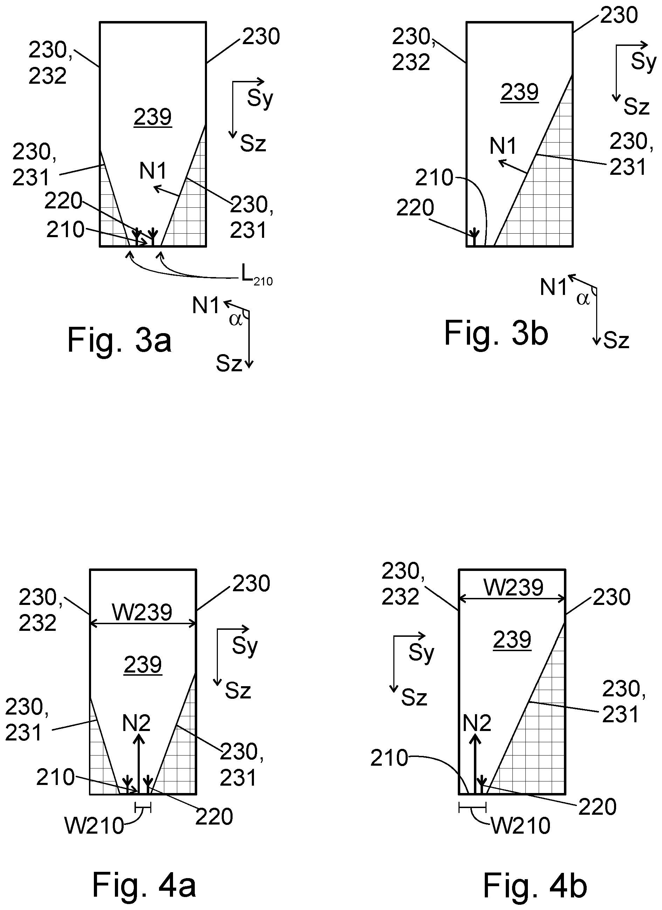

A cyclone is commonly used to separate solid material from a mixture of the solid material and a gaseous substance. A cyclone may be used in a thermal system, such as a circulating fluidized bed boiler. As an example, the European patent EP1831604 discloses in its Fig. 3 a circulating fluidized bed boiler including, among other things, a furnace and a cyclone. Essentials of the figure are reproduced as Figure 1 of the present specification, including a furnace 110 and a cyclone 120. Mixture M, which is present in the furnace 110, enters the cyclone 120 through an inlet channel 200, and in the cyclone 120 both solid material S and gaseous substance G are separated from the mixture M. In general, the heavier solids (i.e. the solid material S) becomes collected at the walls of the cyclone 120 due to centrifugal forces and fall downwards due to gravity, as shown in the figure 1. In contrast, the gaseous substance G can be let out from an upper part of the cyclone 120. The document DE4136935 discloses a cyclone filter that has an upper drum-shaped section with a covering wall and a lower conical section narrowing towards the base where solids drop out.

It has been found that on the bottom of the inlet channel 200 a heap 990 comprising some of the solid material S is oftentimes accumulated, as shown in Fig.1. The heap 990 has several disadvantages. First, to ensure proper functioning of the system, the heap 990 needs to be removed every now and then. The removal of the heap 990 is a complex task, as the heap 990 may be very large (several cubic metres) and, in use, extremely hot (several hundred degrees Celsius). Thus, to remove the heap 990, it needs to be cooled down, which may take days. Moreover, upon cooling, the material of the heap 990 may become sintered to an integrated solid piece, of which removal is hard. Second, the density of the solid material of the heap 990 may be of the same order as that of sand, e.g. about 2 tonnes per cubic metre. Given that the size of the heap 990 may be several cubic metres, the weight of the heap 990 needs to be taken into account when designing the system so as to withstand the increased weight of the system due to formation of the heap 990.

At least for these reasons there is a need to reduce the tendency of forming a heap 990 to an inlet channel 200 of a cyclone 120; particularly in a thermal system.

### Summary

The inventors have found that the tendency of forming a heap 990 to an inlet channel 200 of a cyclone 120 can be reduced by providing a bottom 210 of the inlet channel 200 with a nozzle 220 or nozzles 220 configured to feed gas to the inlet channel 200 for enhancing flow of the solid material S at the bottom 210 of the inlet channel 200. In addition, the shape of the inlet channel is designed so as to taper towards the bottom 210 of the inlet channel 200, the inlet channel thereby collecting the solid material to the nozzles 220.

The nozzles may be configured to blow air or other gas so as to enhance the flow of the solids towards an interior of the cyclone. The bottom 210 of the inlet channel 200 may be inclined so as to enhance the flow of the solids towards the interior of the cyclone.

The invention is described in more specific terms in claim 1. Preferable embodiments are disclosed in the dependent claims. These and other embodiments are explained in the description and drawings.

### Brief description of the drawings

- Fig. 1: shows a circulating fluidized bed boiler of prior art,
- Fig. 2a: shows a first embodiment of a cyclone,
- Fig. 2b: shows a second embodiment of a cyclone,
- Fig. 2c: shows the first embodiment of the cyclone and some directions in detail,
- Fig. 3a: shows a first cross section of an inlet channel of a cyclone according to the first embodiment,
- Fig. 3b: shows a first cross section of an inlet channel of a cyclone according to the second embodiment,
- Fig. 4a: shows some directions and measures of Fig. 3a in more detail,
- Fig. 4b: shows some directions and measures of Fig. 3b in more detail,
- Figs. 5a and 5b: show cross sections of an inlet channel of a cyclone according to an embodiment, e.g. the first embodiment or the second embodiment, the cross section being perpendicular to the first cross section,
- Figs. 6a to 6c: show cross sections of an inlet channel of a cyclone according to an embodiment, e.g. the first embodiment or the second embodiment, the cross section being perpendicular to the first cross section,
- Fig. 7a: shows a first cross section of an inlet channel of a cyclone, the inlet channel being provided with nozzles also on the walls and otherwise substantially similar to the first embodiment of Fig. 3a,
- Fig. 7b: shows a first cross section of an inlet channel of a cyclone, the inlet channel being provided with nozzles also on a wall and otherwise substantially similar to the second embodiment of Fig. 3b,
- Fig. 8: shows a cross section of an inlet channel of a cyclone according to an embodiment, e.g. the first embodiment or the second embodiment, the cross section being perpendicular to the first cross section, and an angle is more detail,
- Figs. 9a to 9d: show cross sections of an inlet channel of a cyclone according to embodiments, the walls of the inlet channel comprising heat transfer tubes covered by mortar,
- Fig. 10: shows a cross section of a cyclone including the inlet channel thereof, the cross-section being substantially horizontal,
- Fig. 11: shows a thermal system and feeding same gas, e.g. air, both to a reactor, e.g. furnace, and to the nozzles of the inlet channel of the cyclone, and
- Fig. 12: shows a thermal system and feeding recycled gas to the nozzles of the inlet channel of the cyclone, the recycled gas having been separated in the cyclone from the mixture.

In the figures, the direction Sz is, in typical use, arranged downwards; Sx is perpendicular to Sz, in typical use horizontal, and substantially parallel to the direction of flow of the mixture M within the inlet channel; and Sy is perpendicular to both Sx and Sz.

### Detailed description

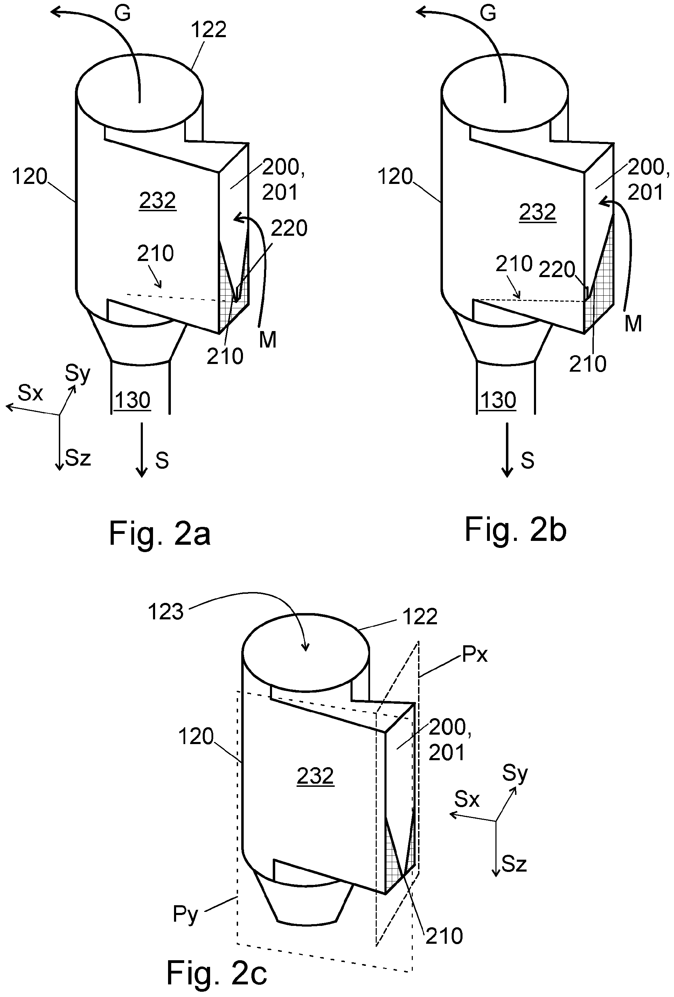

Figures 2a to 10 show embodiments of a cyclone 120. The cyclone 120 is suitable for separating solid material S from a mixture M and configured so. The mixture comprises both the solid material S and gaseous substance G; thereby being a mixture M of the solid material S and the gaseous substance G. The operating principle of a cyclone is cyclonic separation, well known to a skilled person and readable from textbooks.

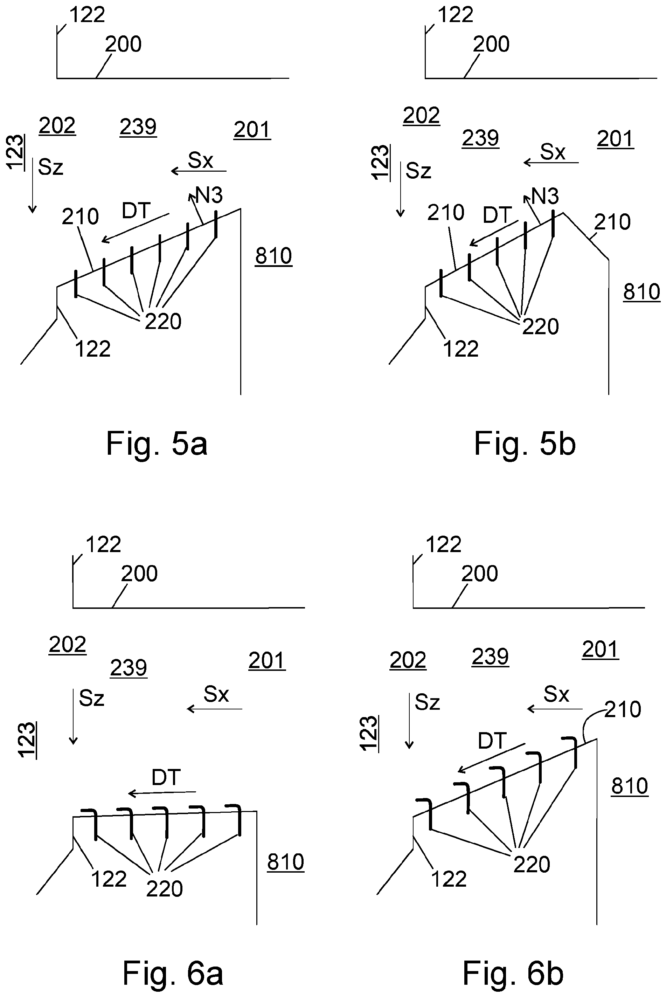

Referring to Figs. 2a to 2c, the cyclone 120 comprises a cylindrical body 122 having a central axis in a first direction Sz. In a typical use, the first direction Sz is directed to the same direction as gravity, i.e. downwards. The term "cylindrical body 122" refers to a body having substantially circular interior 123, even if the outer surfaces of the walls of the body 122 may have a different shape. The cyclone 120 comprises an inlet channel 200. The inlet channel 200 is configured to let the mixture M in to the cylindrical body 122. In particular, the inlet channel 200 is configured to let the mixture M in to an interior 123 of the cylindrical body 122. The inlet channel 200 has in inlet 201 for receiving the mixture M and an outlet 202 opening to the interior 123 of the cylindrical body 122. The inlet 201 and outlet 202 are shown at least in Figs. 5a to 6b.

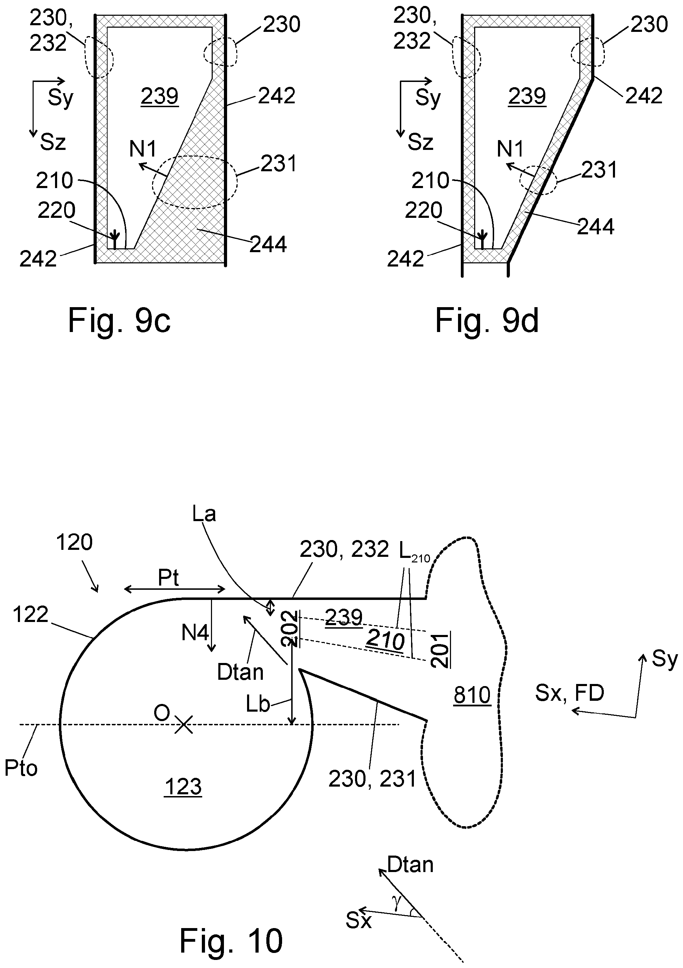

The inlet channel 200 extends a second direction Sx, the second direction Sx being perpendicular to the first direction Sz. Moreover, the inlet channel 200 is configured to feed the mixture M into the cylindrical body 122 in a direction, which is more or less parallel with the second direction Sx. More precisely, the inlet channel 200 is configured to feed the mixture M into the cylindrical body 122 in a direction of feed (FD, see Fig. 10); and a normal projection of the direction of feed FD onto a plane having a normal in the first direction Sz is parallel to the second direction Sx (see Fig. 10). However, referring to Figs. 5a to 6b, the direction of feed FD may have a component also in the first direction Sz, as evidenced by the direction DT in which the solid material may travel along the bottom 210. As indicated above, in an embodiment, the first direction Sz is downwards vertical. Thus, in this embodiment, the second direction Sx is parallel to a normal projection of the direction of feed FD, the normal projection being on a horizontal plane. In the above, the direction of feed refers to an average direction of the mixture M in use, the mixture M in use flowing in the inlet channel 200 from the inlet 201 to the outlet 202.

In line with this, the outlet 202 is arranged in at least the second direction Sx from the inlet 201. In addition to being arranged in the positive second direction Sx, the outlet 202 may be arranged e.g. below the inlet 201. In such an embodiment, the outlet 202 would be arranged also in the first direction Sz from the inlet 201. More precisely, the outlet 202 would be arranged in such a direction from the inlet 201 that the direction has positive components in the first direction Sz and the second direction Sx. As an example, a bottom 210 of the inlet channel may be inclined towards an interior 123 of the cylindrical body 122 (see Figs. 5a to 6b), and a ceiling of the inlet channel 200 may be inclined in a similar manner as the bottom 210 (not shown).

The first direction Sz and the second direction Sx, as defined above, also define a third direction Sy, which is perpendicular to both Sz and Sx. In the figures (e.g. 2a) the directions comply with the ordinary right-hand rule: Sz=Sx×Sy, wherein × denotes the vector product of the two directions (i.e. vectors) Sx and Sy.

Referring to the purpose of reducing the tendency of forming the heap 990, a nozzle 220 or nozzles 220 have been provided at a bottom the inlet channel 200. Thus, the cyclone comprises a nozzle 220 or several nozzles 220 arranged at the bottom 210 of the inlet channel 200. The nozzles 220 are configured to feed gas to the inlet channel 200 for enhancing flow of the solid material S at the bottom 210 of the inlet channel 200. As air or other gas is fed through the nozzles 220 to the inlet channel 200, the flow of the solid material S is enhanced, whereby the tendency of forming the heap 990 is reduced. Instead of forming the heap 990 the solid material flows with the mixture M in the inlet channel 200 to the interior 123 of the cylindrical body 122, because of the fluidizing effect of provided by the gas fed through the nozzles 220.

However, a smaller heap or smaller heaps could still form on the bottom 210 of the inlet channel 200 to such areas not affected by the nozzles 220.

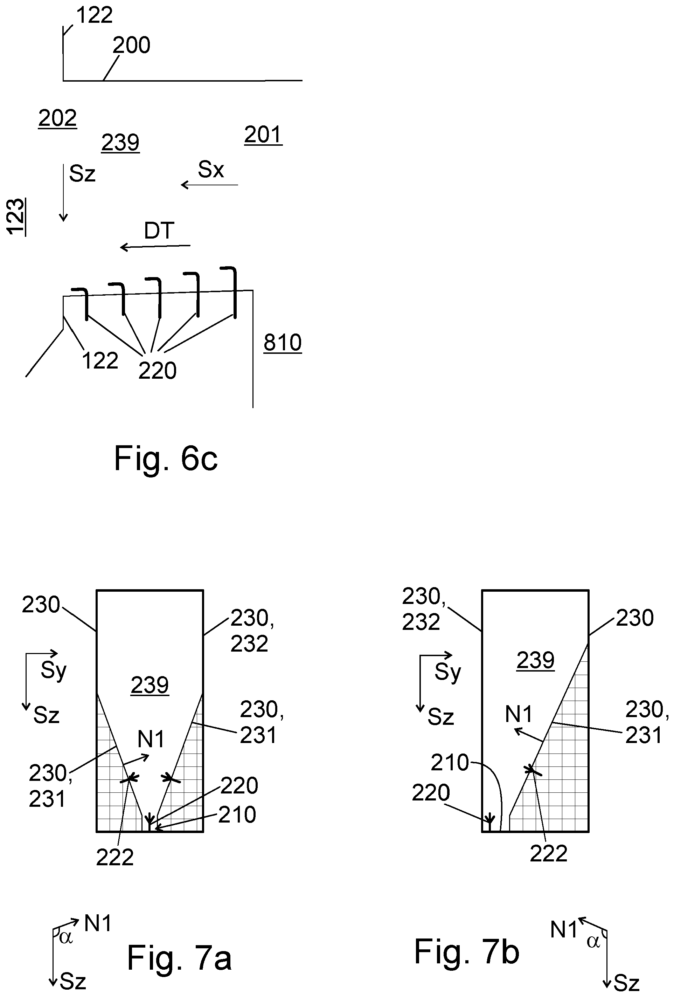

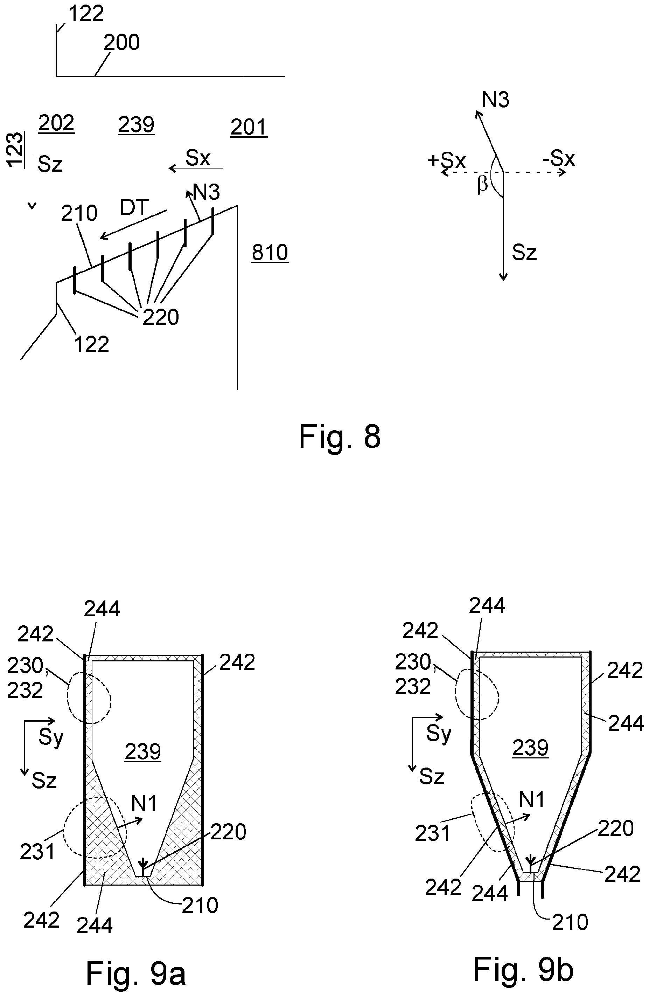

Therefore, the shape of the inlet channel 200 has been designed such that the interior 239 of the inlet channel 200 tapers in the first direction Sz towards the bottom 210 of the inlet channel 200. Thus, the tapering shape of the inlet channel 200 forms a funnel that collects the solid material to the bottom 210 of the inlet channel 200, wherein the nozzles 220 are provided. Reference is made to Figs. 2a, 2b, 3a, and 3b. Referring to Figs. 7a and 7b, the shape need not taper throughout the whole height of the inlet channel; not even close to the bottom 210. As indicated in Figs. 7a and 7b, the nozzle 220 may be provided in a bottom channel delimited by walls comprising substantially vertical parts. Referring to Figs. 9a and 9c, the outer surfaces of the inlet channel 200 need not taper in the first direction Sz.

In this way, the solid material, if not flowing directly to the interior 123 of the cylindrical body 122, will fall towards the bottom 210 of the inlet channel 200 due to gravity, wherein the solid material will be in a fluidized state because of the gas fed by the nozzle(s) 220 and will be guided to the interior 123 at least along the bottom 210. Moreover, the tapering shape of the interior 239 of the inlet channel collects the solids to the nozzle(s) 220. As an example, Figs. 5a and 5b show the direction DT in which the solid material may travel along the bottom 210.

To enhance the collecting of the solid material at the bottom 210, the shape of the inlet channel 200, in particular the shape of the interior 239 thereof, should taper towards the bottom 210 reasonably steeply. Yet, at the same time there are two other design factors to consider. First, a width as measured at a level of the bottom 210 of the inlet channel 200 should not be too large in order to prevent formation of heap/heaps beside the nozzles 220 on the bottom 210. In addition, preferably, the shape of only a lower part of the inlet channel 200 should be tapering towards the bottom 210. Conversely, an upper part of the inlet channel 200 preferably has substantially constant width. This is preferable from the point of view of a throughput of the inlet channel 200. However, referring to Figs. 7a and 7b, the lowest part of the interior 239 need not have a tapering shape.

For these reasons and with reference to Figs. 3a and 3b, in an embodiment, the inlet channel 200 of the cyclone 120 comprises walls 230, 231 limiting an interior 239 of the inlet channel 200. The walls 230, 231 are designed so as to form the tapering shape as discussed above. Thus, a least one of the walls 230, 231, i.e. a first wall 231, the first wall shown with the reference number 231 in Figs. 3a and 3b, extends from the bottom 210 of the inlet channel 200 such that the surface of the wall 231 that faces the interior 239 is inclined. Thus, at least a part of the first wall 231 extends in an inclined manner. The wall 231 extends from the bottom 210 of the inlet channel 200 such that a first angle α between (i) a first normal N1 of at least a part of a surface of the first wall 231 extending from the bottom 210 of the inlet channel 200 and (ii) the first direction Sz is 110 to 160 degrees. Herein the surface of the wall 231 refers to the surface limiting the interior 239 of the inlet channel 200. Thus, the first normal N1 faces towards the interior 239 of the inlet channel 200. In Figs. 3a and 3b a cross-section of the inlet channel 200 is shown, the cross-section being on a plane Px, the plane Px shown in Fig. 2c. As shown in Figs. 3a and 3b the inclined part of the first wall 231 extends, in an embodiment, from the bottom 210. However, as shown in Figs. 7a and 7b the inclined part of the first wall 231 extends, in an embodiment, from a vertical part, the vertical part extending from the bottom 210.

Thus, as depicted in Fig. 3a, in an embodiment, wherein the first direction Sz is downwards, an angle between the first normal N1 and a horizontal plane may be e.g. 20 to 70 degrees. The minimum of this angle (as well as the first angle α) ensures that the solid material becomes collected at the bottom 210, and the maximum of this angle (as well as the first angle α) ensures a proper width of the bottom and/or a proper height of the tapering part of the inlet channel 200.

Referring to Fig. 3a, in an embodiment, the inlet channel 200 comprises two opposite walls 231 such that a first angle α between (i) a first normal N1 of at least a part of a surface of a first one of the opposite walls 231 extending from the bottom 210 of the inlet channel 200 and (ii) the first direction Sz is within the limits disclosed above; and an angle between (i) a normal of at least a part of a surface of a second one of the opposite walls 231 extending from the bottom 210 of the inlet channel 200 and (ii) the first direction Sz is within the limits disclosed above. In the embodiment of Fig. 3a the bottom 210 of the inlet channel 200 may be substantially at the centre of the inlet channel 200 in the third direction Sy. For example, the bottom 210 may be arranged at such a location that a width of a first part of the inlet channel 200 arranged on a first side of the bottom 210 is 75% to 125% of a width of a second part of the inlet channel 200 arranged on a second side of the bottom 210, the widths of the parts being defined in the third direction Sy. Herein the first and second sides of the bottom 210 are arranged on opposite sides of a central line of the inlet channel 200, the central line being at a centre in the third direction Sy.

In such a case, the opposite walls 231 may be substantially symmetrical with respect to a central plane of the inlet channel, as shown in Fig. 7a. However, the walls need not be symmetrical in such a manner, as shown in Figs. 3a and 4a.

Referring to Fig. 3b, in an embodiment, the inlet channel 200 comprises only one such wall 231 that the angle α between (i) a first normal N1 of at least a part of a surface of a first one of the opposite walls 231 extending from the bottom 210 of the inlet channel 200 and (ii) the first direction Sz is within the limits disclosed above. The opposing wall may be e.g. substantially vertical, as indicated in Fig. 3b.

A purpose of the inclination of the surface of the wall 231 is to guide the solid material to the bottom 210 of the inlet channel 200. Irrespective of the magnitude of the first angle α, accumulation of the solid material on the walls 230, 231 of the inlet channel 200 can be prevented or at least reduced by providing one or more auxiliary nozzles 222 on the walls 230, 231 to further fluidize the solid material and enhance the material flow. Therefore, in an embodiment, the cyclone 120 comprises an auxiliary nozzle 222 or auxiliary nozzles 222, which is/are provided on the at least part of the wall having the first normal N1. Such auxiliary nozzles 222 are shown in Figs. 7a and 7b. The auxiliary nozzle(s) 222 is/are configured to feed gas to the inlet channel 200 for enhancing flow of the solid material S in the inlet channel 200. In particular, the auxiliary nozzle(s) 222 is/are configured to feed gas to the inlet channel 200 for enhancing flow of the solid material S in the inlet channel 200 at such locations of the inlet channel 200 where the shape of the inlet channel 200 tapers in the first direction Sz towards the bottom 210 of the inlet channel 200. If the first angle α is selected from the lower end of the range given above, or is even lower, the risk of solid material accumulating on the wall 231 increases, if not provided with an auxiliary nozzle 222.

As for a proper width of the bottom 210, Figs. 4a and 4b show a width W210 of the bottom 210. Herein the width W210 is defined in the third direction Sy, defined above. As for the term "bottom", in an embodiment, the bottom 210 of the inlet channel 200 comprises such a part that has a second normal N2 that faces an interior 239 of the of the inlet channel 200 and does not have a component in third direction Sy. Herein the part refers to a surface. Thus, the bottom 210 of the inlet channel 200 comprises such a part that a surface of the part has a second normal N2 that faces an interior 239 of the of the inlet channel 200 and does not have a component in third direction Sy. Thus, the surface of the part may be horizontal or inclined towards the interior 123 of the cylindrical body 122.

Concerning the expression second normal N2 does not have a component in third direction Sy, as well known, in a coordinate system any vector (including a direction vector) can be expressed by a combination of its components. In such a case, the coordinate system is defined by its basis vectors, and any vector can be expressed as a linear combination of the basis vectors. As such, any vector can be broken to its components. Within this description, the first, second, and third directions (Sz, Sx, and Sy) define a coordinate system. When the second normal N2 does not have a component in third direction Sy, and the second normal N2 is broken to its components in the coordinate system defined by Sz, Sx, Sy, the component associated with Sy is zero. However, the bottom 210 of the inlet channel 200 need not comprises such a part that has a second normal N2 that faces an interior 239 of the of the inlet channel 200 and does not have a component in third direction Sy.

Likewise, when another direction (e.g. DT) has a positive component in a specific direction which is one of the direction of the basis vectors (Sz, Sx, and Sy)of the coordinate system, the component associated with the specific direction is not zero, but positive.

Concerning the width W210 of the bottom 210, in an embodiment, a width W210 of the bottom 210, e.g. a width of the part of the bottom 210 having the second normal N2, is at most 50 % of a width W239 of the interior 239 of the of the inlet channel 200. Herein the width W210 is defined in the third direction Sy. Moreover, the width W239 of the interior 239 of the of the inlet channel 200 is defined in the third direction Sy. As shown in Figs. 4a and 4b, the width W239 of the interior 239 of the of the inlet channel 200 refers to a width as measured in an upper part of the inlet channel 200. The width W239 of the interior 239 may be the maximum width of the interior 239 in the third direction Sy.

As shown in Figs. 3a and 4b, in particular when the width W210 of the bottom 210 is large, e.g. close to or up to 50% of the width W239 of the interior 239, it may be necessary to provide the bottom 210 with multiple nozzles 220, e.g. side by side (in the third direction Sy) to avoid formation of heaps on a side of a nozzle 220.

In embodiment, the width W210 of the bottom 210 is at most 35% of the width W239 of the interior 239 of the of the inlet channel 200. The width W210 of the bottom 210 may be e.g. at least 5 % of the width W239 of the interior 239 of the of the inlet channel 200.

Referring to Figs. 4a and 4b, in an embodiment, at least outlets of the nozzles 220 are arranged above the bottom 210, e.g. above the part of the bottom 210 having the second normal N2. Thus, in an embodiment, the nozzle 220 is provided (or the nozzles 220 are provided) on the at least part of the bottom 210 having the second normal N2. Naturally, the bottom 210 does not need to comprise such a part that has a surface having the second normal N2 defined above, even if the cyclone 120 comprises the nozzle(s) 220.

As for forming the walls 230, 231, preferably the walls 230, 231 comprise heat transfer tubes 242 to recover heat from the inlet channel 200. Heat transfer tubes 242 are shown in Figs. 9a to 9d. However, the environment in the inlet channel 200 is harsh, because the flowing solid material tends to erode the walls 230, 231 of the inlet channel 200. Thus, if the heat transfer tubes 242 as such would be exposed to the flowing solid material, they would erode fast. In order to prevent erosion, in an embodiment, the heat transfer tubes 242 of the walls 230, 231 are covered with mortar 244, at least on the side facing the interior 239 of the inlet channel.

Thus, in an embodiment the bottom 210 of the inlet channel 200 comprises heat transfer tubes 242 covered by mortar 244. Moreover, preferably, the wall 231, of which at least part has the first normal N1, comprises heat transfer tubes 242 covered by mortar 244.

A thickness of the mortar 244 does not need to be constant. As an example, Figures 9a and 9b show embodiments, wherein the bottom 210 is substantially at the centre of the inlet channel 200 in the third direction Sy. Referring to Figs. 9a and 9b, in an embodiment, the walls 230, 231 comprise heat transfer tubes 242 covered by mortar 244 so that mortar 244 is arranged at least between the interior 239 of the inlet channel and the heat transfer tube 242 to protect the heat transfer tube 242 from erosion.

To have reasonable protection against erosion, thickness of the mortar 244 on the heat transfer tube 242 may be at least 20 mm, such as at least 40 mm.

As detailed in Fig. 9a, in an embodiment, a thickness of the mortar 244 is adapted so that an inclined surface of the wall 231 is formed even if a longitudinal direction of the heat transfer tube 242 comprised by the wall 231 is parallel to the first direction Sz. This is achieved by using a thick layer of mortar 244 near the bottom 210 of the inlet channel; and conversely, a thinner layer of mortar 244 above the bottom 210.

As detailed in Fig. 9b, in an embodiment, a thickness of the mortar 244 may be substantially constant. Thus, an inclined surface of the wall 231 is formed by a bending point of the heat transfer tube 242, as shown in Fig. 9b, and by using a substantially constant thickness of mortar 244 to cover the heat transfer tube 242.

What has been said concerning the thickness of the mortar 244 applies in some embodiments, where the bottom 210 is arranged at one side of the inlet channel 200 in the third direction Sy, as depicted in Figs. 9c and 9d. For example, as shown in Fig. 9c the heat transfer tubes 242 may extend (i.e. they may have their longitudinal directions) in the first direction Sz, even if a surface of the wall 231 is inclined. As another example, as shown in Fig. 9d, the heat transfer tubes 242 may comprise a bend so that a surface of the walls 231 is inclined even if a thickness of the mortar 244 is substantially constant.

Referring to Figs. 5a, 5b, 6a, 6b, 6c, and 8 the bottom 210 may also be inclined towards the interior 123 of the cylindrical body 122 of the cyclone 120. Thus, in an embodiment, at least a part of the bottom 210 of the of the inlet channel 200 is inclined such that material travelling along the bottom 210 towards the cylindrical body 122 travels in a direction DT that has a positive component in the first direction Sz (and, by definition, also a component in the second direction Sx). Thus, in typical use and in an embodiment, the material travels towards the outlet 202 and simultaneously at least slightly downwards. The material travelling along the bottom 210 towards the cylindrical body 122 travels from the inlet 201 to the outlet 202 (see Figs. 5a to 6b). In Figs. 5a to 6b a cross-section of the inlet channel 200 is shown, the cross-section being on a plane Py, the plane Py shown in Fig. 2c.

In the embodiment of Fig. 5a, the whole bottom 210 is inclined in the manner discussed above. Thus, the material travelling from the inlet 201 towards the cylindrical body 122 (i.e. towards the interior 123 thereof) travels also in the positive first direction Sz. In line with this, the direction DT in which the material on the bottom 210 travels has a positive component in the first direction Sz. What has been said above about breaking a vector to its components in a coordinate system applies.

In the embodiment of Fig. 5b, only such a part of the bottom 210 that is close to the cylindrical body 122 is inclined in the manner discussed above. However, such a part of the bottom 210 that is close to the reactor 810 (e.g. furnace 110) may be inclined in the opposite direction. Thus, material that would tend to accumulate on the side of the reactor 810 of the bottom 210 of the inlet channel, would fall along the bottom 210 back to the reactor 810.

Concerning a magnitude of inclination of the bottom 210, reference is made to Fig. 8. Thus, in an embodiment, the bottom 210 of the inlet channel 200 comprises such a part that has a third normal N3 that faces an interior 239 of the of the inlet channel 200. The third normal N3 has a first component in the first direction Sz and a second component in the second direction Sx. The third normal N3 may have a component also in the third direction Sy.

Because of the inclination of the bottom, the third normal N3 forms a smaller angle with the positive second direction Sx than with the negative second direction -Sx. Reference is made to Fig. 8 even if the angles with the positive/negative second directions +Sx, -Sx are not shown by reference symbols.

Concerning the inclination, there is no need for this type of inclination, because the solid material can be driven to the interior by the gas feed of the nozzle(s) 220.

However, in an embodiment, a vector defined by the first component (of the third normal N3) and the second component (of the third normal N3) forms a second angle β that is 135 to 180 degrees. Thus, relative to horizontal, an angle of a surface of the bottom 210 may be 0 to 45 degrees. Reference is made to Fig. 8. However, the bottom 210 may be at least slightly inclined. Thus, in an embodiment, the second angle β is 135 to 178 degrees. Thus, relative to horizontal, an angle of a surface of the bottom 210 may be 2 to 45 degrees. The second angle β is shown in Fig. 8. With this definition, the possible inclination of the bottom 210 in the third direction Sy is excluded by defining the second angle only in terms of the two components of the third normal N3 as defined above. For example, if the walls 231 (see Fig. 3a or 7a) of the inlet channel extend to the bottom 210 so that they form a sharp V-shape with substantially zero width W210, inclination of the bottom 210 also in the third direction Sy is obvious, but does not necessarily affect guiding of the material towards the interior 123. For these reasons, the third component corresponding to the direction Sy of the third normal N3 is omitted from the above definition.

As for the inclination, a surface of the bottom may be made by mortar, and a thickness of the mortar need not be constant. Thus, even if the bottom 210 is made by tubes covered by mortar, the tubes as such may be arranged such that there is no inclination, or even some inclination towards the inlet 201 of a surface defined by the tubes as such. Then a thinner layer of mortar may be applied closer to the outlet 202 and a thicker layer of mortar may be applied closer to inlet 201 so that an inclination of the surface formed by the mortar is within the limits disclosed above. Varying thickness of the mortar at the bottom 210 is not shown. However, the same principles can be applied to the bottom 210 as shown for the walls in Figs. 9a to 9d.

As detailed above, a purpose of the nozzle(s) 220 is to fluidize the solid material on the bottom 210 in order to improve transfer of the solid material to the interior 123 of the cylindrical body 122. Moreover, the transfer may be further improved by arranging the bottom 210 in an inclined manner towards the interior 123 as detailed above.

Furthermore, as indicated in Figs. 5a to 6c and 8, an embodiment comprises several nozzles 220 at the bottom 210, the several nozzles 220 being arranged subsequently at least in the second direction Sx. This applies irrespective of the magnitude of the second angle β; which may be e.g. 180 degrees or less in this embodiment as detailed above. The several nozzles 220 also help fluidizing the solid material at the bottom 210 and substantially at the whole bottom 210. The nozzles 220 may be also arranged at different heights in the first direction Sz. The nozzles 220 need not guide the solid material, but can be directed to guide the solid material, towards the interior 123.

Thus, the flow of material on the bottom 210 may be further enhanced by the nozzle(s) 200 by directing the nozzle(s) 220 so as to move the solid material towards the interior 123. For example, the nozzle(s) 220 is/are, in an embodiment, configured to feed gas (such as air) to a direction that forms an angle of at most 60 degrees (e.g. at most 45 degrees) with the second direction Sx. Thus, in an embodiment, the nozzle(s) 220 is/are configured to feed gas to the inlet channel 200 such that the feeding of the gas enhances the flow of material on the bottom 210 of the inlet channel 200 towards the interior 123 of the of the cylindrical body 122 of the cyclone 120.

Figures 6a to 6c show embodiments, wherein the nozzles 220 have such a shape that the gas fed by the nozzles 220 guides the solid material towards the interior 123. As indicated therein, the direction of the gas exiting the nozzles 220 forms only a small angle with the second direction Sx to guide the solid material towards the interior 123. The small angle is within the range disclosed above.

Moreover, referring to Figs. 6b and 6c, an embodiment comprises several nozzles 220. Moreover, the level of the nozzles is arranged, relative to each other, so that the nozzles that are close to the interior 123 of the cylindrical body 122 are also located further in the positive first direction +Sz, i.e. in a typical use further down. Correspondingly, the nozzles that are close to the reactor 810 are also located further in the negative first direction -Sz, i.e. in a typical use further up. This has the effect that the nozzles that are further away from the interior 123 blow the fluidizing gas and the solid material over the nozzles that are closed to the interior. Thus, the nozzles themselves no dot form obstacles for the material flow, thereby improving the transfer of the solids in the inlet channel. Moreover, erosion of the nozzles may be reduced.

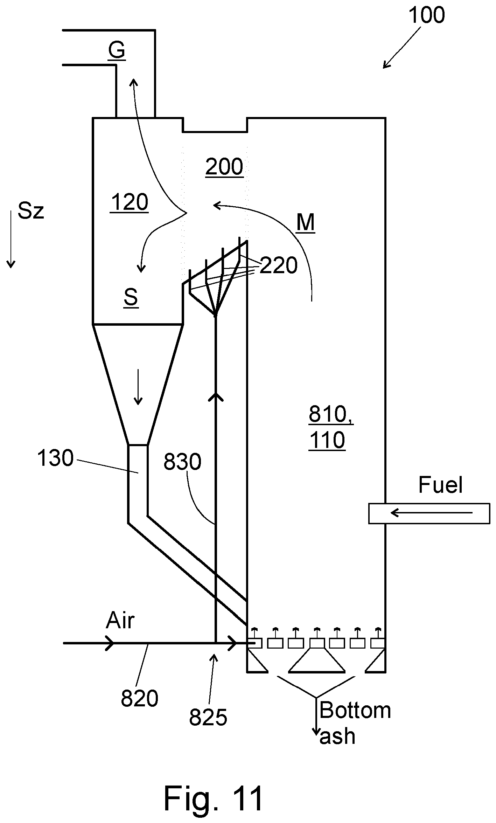

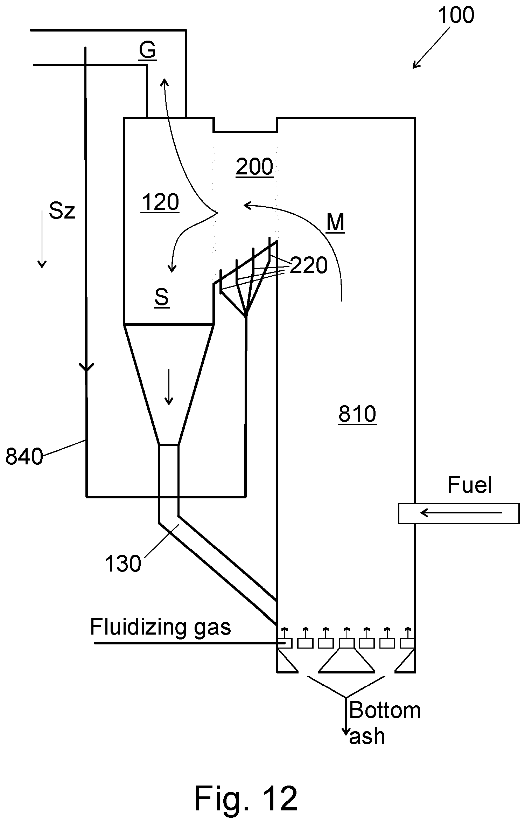

Preferably, the cyclone 120 is arranged as a part of a thermal system Examples of thermal systems include fluidized bed boilers, gasification reactors, and pyrolysis reactors. Thus, an embodiment of the invention is a thermal system comprising the cyclone 120. Examples of thermal systems are shown in Figs. 11 and 12. The thermal system comprises a reactor 810 configured to produce the mixture M of the solid material S and the gaseous substance G. The thermal system is configured to guide the mixture M from the reactor 810 to the inlet channel 200 of the cyclone 120.

In an embodiment, the reactor 810 comprises one of: a furnace 110 of a circulating fluidized bed boiler 100, a pyrolysis reactor, a gasification reactor, and a furnace of a bubbling fluidized bed boiler. Figure 11 shows an example, wherein the reactor 810 comprises a furnace 110 of a circulating fluidized bed boiler 100. In such an embodiment, the primary function of the cyclone is to separate bed material and flue gas from the mixture thereof. Figure 12 shows an example, wherein the reactor 810 comprises a pyrolysis reactor of a circulating fluidized bed type. Even if not shown, the embodiment of the cyclone may be used e.g. to separate fly ash from flue gases, the flue gases being produced e.g. by a bubbling fluidized bed boiler. In such an embodiment, the primary function of the cyclone would be separation of ash (e.g. fly ash) from the flue gases.

As well known, a cyclone functions based on cyclonic separation. Accordingly, in the cyclone, rotational effects and gravity are used to separate the solid material S and the gaseous substance G from the mixture M. In order to enhance the rotational effects and in this way improving the cyclonic separation, the inlet channel 200 is preferably arranged relative to the cylindrical body 122 so that when the mixture M exits the inlet channel 200 and enters the interior 123 of the cylindrical body 122, the direction of movement **of the mixture** M is at least some extent tangential at that position. The term tangential refers to a tangent surface of the interior 123 of the cylindrical body 122. Reference is made to Fig. 10. In Fig. 10, the first direction Sz is perpendicular to the plane shown in the figure and away from the reader. Correspondingly, Fig. 10 shows the feed direction FD, the second direction Sx, and the third direction Sy as discussed above. More precisely, because of the view of Fig. 10, the figure shows only the projection of the feed direction FD onto the plane of the figure 10, which defines the second direction Sx, as detailed above. It is also noted that in Fig. 10 a vortex will form in the interior 123 in a different direction (e.g. counter-clockwise as seen from top) than in the embodiment of Figs. 2a to 2c (wherein the vortex will be a clockwise vortex when viewed from top) because of different position of the inlet channel 200 relative to the interior 123.

Referring to Fig. 10, in an embodiment, the inlet channel 200 extends in the second direction Sx and is configured to feed the mixture M into the cylindrical body 122 in a feed direction FD. As detailed above, the feed direction FD has a component in the second direction Sx and may have a component in the first direction Sz. However, by definition of the second direction Sx (see above), the feed direction FD does not have a component in the third direction Sy. Thus, the inlet channel 200 is configured to feed the mixture M into the cylindrical body 122 at least in the second direction Sx.

The inlet channel 200 has an inlet 201 for receiving the mixture M and an outlet 202 opening to in interior 123 of the cylindrical body 122 for letting the mixture M into the interior 123. What has been said above concerning the location of the outlet 202 relative to the inlet 201 applies. In order to enhance the rotational effects within the cylindrical body 122, in an embodiment, the outlet 202 is arranged to such a location that the second direction Sx forms a third angle y of at most 45 degrees with a tangential direction Dtan of the cylindrical body 122, the tangential direction Dtan defined at the location of the outlet 202 in the interior 123. Herein the tangential direction Dtan refers to such a tangential direction of the interior 123 of the cylindrical body 122 that does not have a component in the first direction Sz (i.e. not considering an axial direction of a surface of the cylindrical interior 123). The tangential direction Dtan, at the location of the outlet 202, is shown in Fig. 10. Naturally, a tangent plane of the cylindrical body 122 defines two such directions that do not have a component in the first direction. One of these directions is shown by the reference Dtan in Fig. 10, and the other of these directions is reverse to that direction. It is noted that in line with what has been said above, i.e. because in an embodiment the angle is y at most 45 degrees, an angle (not shown) between the second direction Sx and the other tangential direction would be at least 135 degrees, because these angles are adjacent angles, as shown in Fig. 10 by the dash line near the symbols Sx and y.

To clarify the relative positioning of the outlet 202 and the cylindrical body 122 in alternative terms, combinable with what has been said above about the third angle y and still referring to Fig. 10, in an embodiment, the cyclone 120, which may be part of the thermal system, comprises walls 230, 231, 232 that limit an interior 239 of the inlet channel 200. One of the walls can be called a second wall 232. Referring to Fig. 10, the second wall 232 is attached to the cylindrical body 122. It is noted that such a second wall 232 is also shown at least in the figures 3a, 3b, 4a, 4b, and 9a to 9d.

The second wall 232 is attached to the cylindrical body 122 such that the part of the second wall 232 that is attached to the cylindrical body 122 has a fourth normal N4. Reference is made to Fig. 10. Herein the fourth normal N4. Refers particularly to the part of the second wall facing the interior.

In Fig. 10, the point of attachment between the cylindrical body 122 and the second wall 232 is where the cylindrical shape of the cylindrical body changes to the planar shape of the second wall 232. However, the second wall 232 way have a curved shape, e.g. with a larger radius of curvature than the radius of the cylindrical body 122.

Referring to Fig. 10, the cylindrical body 122, in particular the interior 123 thereof, defines a tangent plane Pt at the location wherein the second wall 232 is attached to the cylindrical body 122. Furthermore, the second wall 232 is arranged relative to the cylindrical body such that the tangent plane Pt has the fourth normal N4. In other words, a normal of the tangent plane Pt is parallel with the fourth normal N4, i.e. the normal of the part of the second wall 232, which is attached to the cylindrical body. This also improves the generation of a vortex within the interior 123 of the cylindrical body, because this enables at least some of the material entering the interior 123 to enter the interior with a velocity having a substantially tangential direction.

More preferably, at least the bottom 210 is arranged relatively close to the second wall 232 to further improve the generation of the vortex within the interior 123 of the cylindrical body.

More specifically, the inlet channel 200 comprises an outlet 202 opening to an interior 123 of the cylindrical body 122. The outlet 202 comprises a part of the bottom 210 of the inlet channel. For example, Figure 10 shows the lines L₂₁₀ that define the bottom 210. The lines may be e.g. such portions of the inlet channel 210 where inclined walls extend from the bottom 210. Such points are shown also in Fig. 3a by the references L₂₁₀.

In particular, the part of the bottom 210 that is comprised by the outlet 202 is, in an embodiment, arranged relatively close to the second wall 232. More specifically, in an embodiment, the outlet 202 is arranged to such a location that:
- a primary distance La is arranged between the part of the bottom 210 comprised by the outlet 202 and the second wall 232; and
- a secondary distance Lb is arranged between the part of the bottom 210 comprised by the outlet 202 and a plane Pto that has the fourth normal N4 (e.g. is parallel to a second wall 232, which may be planar) and comprises a central axis O of the cylindrical body 122; and
- the primary distance La is less than the secondary distance Lb; La < Lb.

The primary distance La and the secondary distance Lb are shown in Fig. 10.

This position of the outlet 202, too, helps to keep the third angle y reasonably low thereby improving the formation of the vortex in the interior 123 of the cylindrical body 122.

In line with this, e.g. the inlet channels of Figs. 3a, 3b, 4a, 4b, 9c, and 9d are particularly suitable as an inlet channel of the cyclone of Figs. 2a to 2c, because therein the second wall 232 is arranged to have a small co-ordinate value in the third direction Sy. In contrast, in Fig. 10, the second wall 232 has a large co-ordinate value in the third direction Sy. However, in the embodiment of Fig. 10 an inlet channel having the shape of e.g. a mirror image of an inlet channel of any one of the Figs. 3a, 3b, 4a, 4b, 9c, and 9d would be preferable, because in Fig. 10, the second wall 232 should have a large co-ordinate value in the third direction Sy, and the bottom 210 is preferably close to the second wall 232 as detailed above. Herein the mirror image refers to a planar symmetric image, the plane of symmetry having a normal to the third direction Sy.

Concerning operating the nozzle(s) 220, the gas that fluidizes the solid material in the inlet can be fed continuously or the gas feed can be pulsed.

In general, the type of gas that is fed to the nozzle(s) 220 may be selected according to needs. This may imply using a gas with low oxygen content, e.g. if the gaseous substance G separated by the cyclone subsequently serves for the purposes of fuel. Examples include pyrolysis and gasification. However, in combustion processes gas with higher oxygen content, such as air, can be used. Moreover, particularly in fluidized bed boilers pressurized air is naturally available because pressurized air is used as combustion air.

Thus, in an application, wherein the reactor 810 that produces the mixture M is a furnace 110 of a fluidized bed boiler, same air may be fed to the furnace 110 as combustion air and to the nozzle(s) 220 for fluidizing the material in the inlet channel 200 of the cyclone 120.

In line with this and with reference to Fig. 11, an embodiment of a thermal system comprises a first feed channel 820 for feeding gas to the reactor 810 of the thermal system. The thermal system may be a circulating fluidized bed boiler. The reactor 810 may be a furnace 110. In the embodiment, the first feed channel 820 comprises a first branch 825. A purpose of the branch 825 is to divide the gas to two parts; a first part for the reactor 810 and a second part for the inlet channel 200. Thus, the thermal system comprises a first pipeline 830 for conveying the second part of the gas from the first branch 825 to the nozzle(s) 220; and as detailed above, the first feed channel 820 is for feeding the first part of the gas to the reactor 810. In an embodiment, wherein the thermal system is a fluidized bed boiler, the first feed channel 820 is configured to feed (the first part of the) combustion air into the furnace 110 of the fluidized bed boiler and (a second) a part of the combustion air is configured to be fed to the nozzles 220 through the first branch 825 and the first pipeline 830.

As detailed above, in an application, wherein the reactor 810 produces gaseous substance G that is usable as fuel, the gas fed to the nozzle(s) 220 should not contain much oxygen. In such an embodiment, some of the gaseous substance G may be recycled to be used as the fluidizing gas fed to the nozzles(s) 220. In line with this, and with reference to Fig. 12, an embodiment of a thermal system comprises a second pipeline 840 configured to feed a part of the gaseous substance G separated by the cyclone 120 to the nozzle(s) 220.

Naturally, even if the thermal system is a fluidized bed boiler and air is fed to the furnace 110, some of the gaseous substance G separated by the cyclone 120 may be used for fluidizing material in the inlet channel in accordance with the embodiment of Fig. 12. However, typically the embodiment of Fig. 12 requires a pump or a fan for recycling a part of the gaseous substance G separated by the cyclone 120 to the nozzles 220. By using combustion air also in the nozzle(s) 220 another pump is not needed.

As indicated above, in an embodiment, the first direction Sz is downwards vertical. Thus, the invention also concerns a use of the cyclone 120 as disclosed above and/or in the appended claims so that the first direction Sz is downwards. In addition, the invention also concerns a use of thermal system as disclosed above and/or in the appended claims so that the first direction Sz is downwards.

## Claims

1. A cyclone (120) for separating solid material (S) from a mixture (M) of the solid material (S) and a gaseous substance (G), the cyclone (120) comprising
- a cylindrical body (122) having a central axis in a first direction (Sz),
- an inlet channel (200), the inlet channel (200) being configured to let the mixture (M) in to the cylindrical body (122), and
- nozzles (220) configured to feed gas to the inlet channel (200), wherein
- the cyclone (120) is configured to let out the solid material (S) from the cylindrical body (122) in the first direction (Sz),
**characterized in that**
- an interior (239) of the inlet channel (200) tapers in the first direction (Sz) towards a bottom (210) of the inlet channel (200) and
- the nozzles (220) are arranged at the bottom (210) of the inlet channel (200), the nozzles (220) being for enhancing flow of the solid material (S) at the bottom (210) of the inlet channel (200).

2. The cyclone (120) of claim 1, wherein the inlet channel (200) of the cyclone (120) comprises
- walls (230, 231, 232) limiting an interior (239) of the inlet channel (200), at least a first wall (231) of the walls extending from the bottom (210) of the inlet channel (200) so that
- a first angle (α) between a first normal (N1) of at least a part of a surface of the first wall (231) and the first direction (Sz) is 110 to 160 degrees, wherein
- the first normal (N1) faces towards the interior (239).

3. The cyclone (120) of claim 2, comprising
- an auxiliary nozzle (222) provided on the at least part of the first wall (231) having the first normal (N1).

4. The cyclone (120) of any of the claims 1 to 3, wherein
- the inlet channel (200) extends and is configured to feed the mixture (M) into the cylindrical body (122) at least in a second direction (Sx), which is perpendicular to the first direction (Sz), whereby a third direction (Sy) is perpendicular to the first direction (Sz) and the second direction (Sx),
- a width (W210) of the bottom (210) is at most 50 % of a width (W239) of the interior (239) of the of the inlet channel (200); wherein
- the widths (W210, W239) are defined in the third direction (Sy);
preferably,
- the bottom (210) of the inlet channel (200) comprises such a part that has a second normal (N2) that faces an interior (239) of the of the inlet channel (200) and does not have a component in third direction (Sy), and
- the width (W210) the bottom is a width of the part of the bottom (210) having the second normal (N2).

5. The cyclone (120) of any of the claims 1 to 4, wherein
- the inlet channel (200) extends and is configured to feed the mixture (M) into the cylindrical body (122) at least in a/the second direction (Sx), which is perpendicular to the first direction (Sz), whereby a/the third direction (Sy) is perpendicular to the first direction (Sz) and the second direction (Sx),
- the bottom (210) of the inlet channel (200) comprises such a part that has a second normal (N2) that faces an interior (239) of the of the inlet channel (200) and does not have a component in third direction (Sy), and
- the nozzle (220) is provided on the part of the bottom (210) having the second normal (N2).

6. The cyclone (120) of any of the claims 1 to 5, wherein
- the inlet channel (200) has in inlet (201) for receiving the mixture (M) and an outlet (202) opening to an interior (123) of the cylindrical body (122) and
- at least a part of the bottom (210) of the of the inlet channel (200) is inclined such that material travelling along the bottom (210) towards the cylindrical body (122) travels in a direction (DT) that has a positive component in the first direction (Sz);
preferably,
- the bottom (210) of the inlet channel (200) comprises such a part that has a third normal (N3) that faces an interior (239) of the of the inlet channel (200), wherein
- the third normal (N3) has a first component in the first direction (Sz) and a second component in the second direction (Sx),
- a vector defined by the first component and the second component forms a second angle (β) that is 135 to 178 degrees.

7. The cyclone (120) of any of the claims 1 to 6, wherein
- the nozzle (220) is configured to feed gas to the inlet channel (200) such that the feeding of the gas enhances the flow of material on the bottom (210) of the inlet channel (200) towards an interior (123) of the of the cylindrical body (122) of the cyclone.

8. The cyclone (120) of any of the claims 1 to 7, wherein
- the inlet channel (200) extends in a/the second direction (Sx) and is configured to feed the mixture (M) into the cylindrical body (122) at least in the second direction (Sx), the second direction (Sx) being perpendicular to the first direction (Sz),
- the inlet channel (200) has an outlet (202) opening to in interior (123) of the cylindrical body (122), wherein the outlet (202) is arranged to such a location that
- the second direction (Sx) forms a third angle (γ) of at most 45 degrees with a tangential direction (Dtan) of the cylindrical body (122), the tangential direction (Dtan) defined at the location of the outlet (202).

9. The cyclone (120) of any of the claims 1 to 8, comprising
- walls (230, 231, 232) limiting an interior (239) of the inlet channel (200), at least a second wall (232) of the walls (230, 231, 232) being attached to the cylindrical body (122) such that
- the part of the second wall (232) that is attached to the cylindrical body (122) has a fourth normal (N4),
- the cylindrical body (122) defines a tangent plane (Pt) at the location wherein the second wall (232) is attached to the cylindrical body (122), and
- the tangent plane (Pt) has the fourth normal (N4);
preferably in addition,
- the inlet channel (200) comprises an/the outlet (202) opening to an/the interior (123) of the cylindrical body (122), the outlet (220) comprising a part of the bottom (210), wherein the outlet (202) is arranged to such a location that
- a distance (La) between the part of the bottom (210) comprised by the outlet (202) and the tangent plane (Pt) is less than a distance (Lb) between the part of the bottom (210) comprised by the outlet (202) and a plane (Pto) that is parallel to the tangent plane (Pt) and comprises a central axis (O) of the cylindrical body (122).

10. The cyclone (120) of any of the claims 1 to 9, wherein
- the inlet channel (200) extends and is configured to feed the mixture (M) into the cylindrical body (122) in a/the second direction (Sx), which is perpendicular to the first direction (Sz), whereby a/the third direction (Sy) is perpendicular to the first direction (Sz) and the second direction (Sx) and
- the bottom (210) of the inlet channel (200) is substantially at the centre of the inlet channel (200) in the third direction (Sy).

11. The cyclone (120) of any of the claims 1 to 10, wherein
- the bottom (210) of the inlet channel (200) comprises heat transfer tubes (242) covered by mortar (244);
preferably,
- the wall (231) of any of the claims 3 to 11, of which at least part has the first normal (N1), comprises heat transfer tubes (242) covered by mortar (244).

12. A thermal system comprising
- the cyclone (120) of any of the claims 1 to 11,
- a reactor (810) configured to produce the mixture (M) of the solid material (S) and the gaseous substance (G), wherein
- the reactor (810) comprises one of: a furnace (110) of a circulating fluidized bed boiler, a pyrolysis reactor, a gasification reactor, and a furnace of a bubbling fluidized bed boiler and
- the thermal system is configured to guide the mixture (M) to the inlet channel (200) of the cyclone (120).

13. The thermal system of claim 12, comprising
- a first feed channel (820) for feeding gas to the reactor (810) of the thermal system,
- the first feed channel (820) comprising a first branch (825), the thermal system comprising
- a first pipeline (830) for conveying gas from the first branch (825) to the nozzle (220);
preferably,
- the reactor (810) is a furnace (110) of a circulating fluidized bed boiler,
- the first feed channel (820) is configured to feed combustion air into the furnace (110) and
- part of the combustion air is configured to be fed to the nozzle (220) through the first branch (825) and the first pipeline (830).

14. The thermal system of claim 12 or 13, comprising
- a second pipeline (840) configured to feed a part of the gaseous substance (G) separated by the cyclone (120) to the nozzles (220).

15. Use of the cyclone (120) of any one of the claims 1 to 11 such that the first direction (Sz) is downwards or use of the thermal system of any of the claims 12 to 14 such that the first direction (Sz) of the cyclone (120) of the thermal system is downwards.

## Patentansprüche

1. Zyklon (120) zum Abtrennen von Feststoffmaterial (S) aus einem Gemisch (M) des Feststoffmaterials (S) und einer gasförmigen Substanz (G), wobei der Zyklon (120) Folgendes umfasst
- einen zylindrischen Körper (122) mit einer Mittelachse in einer ersten Richtung (Sz),
- einen Einlasskanal (200), wobei der Einlasskanal (200) dazu ausgebildet ist, das Gemisch (M) in den zylindrischen Körper (122) einzulassen, und
- Düsen (220), die dazu ausgebildet sind, dem Einlasskanal (200) Gas zuzuführen, wobei
- der Zyklon (120) dazu ausgebildet ist, das Feststoffmaterial (S) aus dem zylindrischen Körper (122) in der ersten Richtung (Sz) auszulassen,
**dadurch gekennzeichnet, dass**
- sich ein Innenraum (239) des Einlasskanals (200) in der ersten Richtung (Sz) zu einem Boden (210) des Einlasskanals (200) hin verjüngt und
- die Düsen (220) an dem Boden (210) des Einlasskanals (200) angeordnet sind, wobei die Düsen (220) dazu dienen, die Strömung des Feststoffmaterials (S) an dem Boden (210) des Einlasskanals (200) zu verbessern.

2. Zyklon (120) nach Anspruch 1, wobei der Einlasskanal (200) des Zyklons (120) Folgendes umfasst
- Wände (230, 231, 232), die einen Innenraum (239) des Einlasskanals (200) begrenzen, wobei sich mindestens eine erste Wand (231) der Wände von dem Boden (210) des Einlasskanals (200) aus erstreckt, so dass
- ein erster Winkel (α) zwischen einer ersten Normalen (N1) mindestens eines Teils einer Oberfläche der ersten Wand (231) und der ersten Richtung (Sz) 110 bis 160 Grad beträgt, wobei
- die erste Normale (N1) zu dem Innenraum (239) hin weist.

3. Zyklon (120) nach Anspruch 2, umfassend
- eine Hilfsdüse (222), die an dem mindestens einen Teil der ersten Wand (231) mit der ersten Normalen (N1) vorgesehen ist.

4. Zyklon (120) nach einem der Ansprüche 1 bis 3, wobei
- sich der Einlasskanal (200) erstreckt und dazu ausgebildet ist, das Gemisch (M) mindestens in einer zweiten Richtung (Sx), die senkrecht zu der ersten Richtung (Sz) ist, in den zylindrischen Körper (122) einzuspeisen, wodurch eine dritte Richtung (Sy) senkrecht zu der ersten Richtung (Sz) und der zweiten Richtung (Sx) ist,
- eine Breite (W210) des Bodens (210) höchstens 50 % einer Breite (W239) des Innenraums (239) des Einlasskanals (200) beträgt; wobei
- die Breiten (W210, W239) in der dritten Richtung (Sy) definiert sind;
vorzugsweise,
- der Boden (210) des Einlasskanals (200) einen solchen Teil umfasst, der eine zweite Normale (N2) aufweist, die zu einem Innenraum (239) des Einlasskanals (200) hin weist und keine Komponente in dritter Richtung (Sy) aufweist, und
- die Breite (W210) des Bodens eine Breite des Teils des Bodens (210) ist, der die zweite Normale (N2) aufweist.

5. Zyklon (120) nach einem der Ansprüche 1 bis 4, wobei
- sich der Einlasskanal (200) erstreckt und dazu ausgebildet ist, das Gemisch (M) mindestens in einer/der zweiten Richtung (Sx), die senkrecht zu der ersten Richtung (Sz) ist, in den zylindrischen Körper (122) einzuspeisen, wodurch eine/die dritte Richtung (Sy) senkrecht zu der ersten Richtung (Sz) und der zweiten Richtung (Sx) ist,
- der Boden (210) des Einlasskanals (200) einen solchen Teil umfasst, der eine zweite Normale (N2) aufweist, die zu einem Innenraum (239) des Einlasskanals (200) hin weist und keine Komponente in dritter Richtung (Sy) aufweist, und
- die Düse (220) an dem Teil des Bodens (210) vorgesehen ist, der die zweite Normale (N2) aufweist.

6. Zyklon (120) nach einem der Ansprüche 1 bis 5, wobei
- der Einlasskanal (200) einen Einlass (201) zum Aufnehmen des Gemisches (M) und einen Auslass (202) aufweist, der sich zu einem Innenraum (123) des zylindrischen Körpers (122) öffnet, und
- mindestens ein Teil des Bodens (210) des Einlasskanals (200) derart geneigt ist, dass Material, das entlang des Bodens (210) zu dem zylindrischen Körper (122) wandert, sich in einer Richtung (DT) bewegt, die eine positive Komponente in der ersten Richtung (Sz) aufweist;
vorzugsweise,
- der Boden (210) des Einlasskanals (200) einen solchen Teil umfasst, der eine dritte Normale (N3) aufweist, die zu einem Innenraum (239) des Einlasskanals (200) hin weist, wobei
- die dritte Normale (N3) eine erste Komponente in der ersten Richtung (Sz) und eine zweite Komponente in der zweiten Richtung (Sx) aufweist,
- ein durch die erste Komponente und die zweite Komponente definierter Vektor einen zweiten Winkel (β) bildet, der 135 bis 178 Grad beträgt.

7. Zyklon (120) nach einem der Ansprüche 1 bis 6, wobei
- die Düse (220) dazu ausgebildet ist, dem Einlasskanal (200) derart Gas zuzuführen, dass das Zuführen des Gases die Strömung von Material an dem Boden (210) des Einlasskanals (200) zu einem Innenraum (123) des zylindrischen Körpers (122) des Zyklons hin verbessert.

8. Zyklon (120) nach einem der Ansprüche 1 bis 7, wobei
- sich der Einlasskanal (200) in einer/der zweiten Richtung (Sx) erstreckt und dazu ausgebildet ist, das Gemisch (M) mindestens in der zweiten Richtung (Sx) in den zylindrischen Körper (122) einzuspeisen, wobei die zweite Richtung (Sx) senkrecht zu der ersten Richtung (Sz) ist,
- der Einlasskanal (200) einen Auslass (202) aufweist, der sich zu einem Innenraum (123) des zylindrischen Körpers (122) öffnet, wobei der Auslass (202) an einer solchen Stelle angeordnet ist, dass
- die zweite Richtung (Sx) einen dritten Winkel (γ) von höchstens 45 Grad mit einer Tangentialrichtung (Dtan) des zylindrischen Körpers (122) bildet, wobei die Tangentialrichtung (Dtan) an der Stelle des Auslasses (202) definiert ist.

9. Zyklon (120) nach einem der Ansprüche 1 bis 8, umfassend
- Wände (230, 231, 232), die einen Innenraum (239) des Einlasskanals (200) begrenzen, wobei mindestens eine zweite Wand (232) der Wände (230, 231, 232) derart an dem zylindrischen Körper (122) befestigt ist, dass
- der Teil der zweiten Wand (232), der an dem zylindrischen Körper (122) befestigt ist, eine vierte Normale (N4) aufweist,
- der zylindrische Körper (122) eine Tangentialebene (Pt) an der Stelle definiert, an der die zweite Wand (232) an dem zylindrischen Körper (122) befestigt ist, und
- die Tangentialebene (Pt) die vierte Normale (N4) aufweist;
vorzugsweise zusätzlich,
- der Einlasskanal (200) umfasst einen/den Auslass (202), der sich zu einem/dem Innenraum (123) des zylindrischen Körpers (122) öffnet, wobei der Auslass (220) einen Teil des Bodens (210) umfasst, wobei der Auslass (202) an einer solchen Stelle angeordnet ist, dass
- ein Abstand (La) zwischen dem von dem Auslass (202) umfassten Teil des Bodens (210) und der Tangentialebene (Pt) kleiner ist als ein Abstand (Lb) zwischen dem von dem Auslass (202) umfassten Teil des Bodens (210) und einer Ebene (Pto), die parallel zu der Tangentialebene (Pt) ist und eine Mittelachse (O) des zylindrischen Körpers (122) umfasst.

10. Zyklon (120) nach einem der Ansprüche 1 bis 9, wobei
- sich der Einlasskanal (200) erstreckt und dazu ausgebildet ist, das Gemisch (M) in einer/der zweiten Richtung (Sx), die senkrecht zu der ersten Richtung (Sz) ist, in den zylindrischen Körper (122) einzuspeisen, wodurch eine/die dritte Richtung (Sy) senkrecht zu der ersten Richtung (Sz) und der zweiten Richtung (Sx) ist, und
- der Boden (210) des Einlasskanals (200) im Wesentlichen in der Mitte des Einlasskanals (200) in der dritten Richtung (Sy) liegt.

11. Zyklon (120) nach einem der Ansprüche 1 bis 10, wobei
- der Boden (210) des Einlasskanals (200) Wärmeübertragungsrohre (242) umfasst, die mit Mörtel (244) bedeckt sind;
vorzugsweise,
- die Wand (231) nach einem der Ansprüche 3 bis 11, von der mindestens ein Teil die erste Normale (N1) aufweist, Wärmeübertragungsrohre (242) umfasst, die mit Mörtel (244) bedeckt sind.

12. Thermisches System, umfassend
- den Zyklon (120) nach einem der Ansprüche 1 bis 11,
- einen Reaktor (810), der dazu ausgebildet ist, das Gemisch (M) aus dem Feststoffmaterial (S) und der gasförmigen Substanz (G) zu erzeugen, wobei
- der Reaktor (810) eines von Folgendem umfasst: einen Feuerraum (110) eines Kessels mit zirkulierender Wirbelschicht, einen Pyrolysereaktor, einen Vergasungsreaktor und einen Feuerraum eines Kessels mit blasenbildender Wirbelschicht, und
- das thermische System dazu ausgebildet ist, das Gemisch (M) zu dem Einlasskanal (200) des Zyklons (120) zu leiten.

13. Thermisches System nach Anspruch 12, umfassend
- einen ersten Zuführkanal (820) zum Zuführen von Gas zu dem Reaktor (810) des thermischen Systems,
- wobei der erste Zuführkanal (820) einen ersten Abzweig (825) umfasst, wobei das thermische System Folgendes umfasst
- eine erste Rohrleitung (830) zum Fördern von Gas von dem ersten Abzweig (825) zu der Düse (220); vorzugsweise,
- ist der Reaktor (810) ein Feuerraum (110) eines Kessels mit zirkulierender Wirbelschicht,
- ist der erste Zuführkanal (820) dazu ausgebildet, Verbrennungsluft in den Feuerraum (110) einzuspeisen, und
- ist ein Teil der Verbrennungsluft dazu ausgebildet, über den ersten Abzweig (825) und die erste Rohrleitung (830) der Düse (220) zugeführt zu werden.

14. Thermisches System nach Anspruch 12 oder 13, umfassend
- eine zweite Rohrleitung (840), die dazu ausgebildet ist, einen Teil der durch den Zyklon (120) abgetrennten gasförmigen Substanz (G) den Düsen (220) zuzuführen.

15. Verwendung des Zyklons (120) nach einem der Ansprüche 1 bis 11 derart, dass die erste Richtung (Sz) nach unten gerichtet ist, oder Verwendung des thermischen Systems nach einem der Ansprüche 12 bis 14 derart, dass die erste Richtung (Sz) des Zyklons (120) des thermischen Systems nach unten gerichtet ist.

## Revendications

1. Cyclone (120) pour séparer un matériau solide (S) d'un mélange (M) du matériau solide (S) et d'une substance gazeuse (G), le cyclone (120) comprenant
- un corps cylindrique (122) ayant un axe central dans une première direction (Sz),
- un canal d'entrée (200), le canal d'entrée (200) étant configuré pour laisser entrer le mélange (M) dans le corps cylindrique (122), et
- des buses (220) configurées pour amener du gaz au canal d'entrée (200), dans lequel
- le cyclone (120) est configuré pour faire sortir le matériau solide (S) du corps cylindrique (122) dans la première direction (Sz),
**caractérisé en ce que**
- un intérieur (239) du canal d'entrée (200) se rétrécit dans la première direction (Sz) vers un fond (210) du canal d'entrée (200) et
- les buses (220) sont agencées au niveau du fond (210) du canal d'entrée (200), les buses (220) servant à améliorer l'écoulement du matériau solide (S) au niveau du fond (210) du canal d'entrée (200).

2. Cyclone (120) selon la revendication 1, dans lequel le canal d'entrée (200) du cyclone (120) comprend
- des parois (230, 231, 232) délimitant un intérieur (239) du canal d'entrée (200), au moins une première paroi (231) des parois s'étendant depuis le fond (210) du canal d'entrée (200) de sorte que
- un premier angle (α) entre une première normale (N1) d'au moins une partie d'une surface de la première paroi (231) et la première direction (Sz) est de 110 à 160 degrés, dans lequel
- la première normale (N1) est orientée vers l'intérieur (239).

3. Cyclone (120) selon la revendication 2, comprenant
- une buse auxiliaire (222) prévue sur l'au moins une partie de la première paroi (231) ayant la première normale (N1).

4. Cyclone (120) selon l'une quelconque des revendications 1 à 3, dans lequel
- le canal d'entrée (200) s'étend et est configuré pour amener le mélange (M) dans le corps cylindrique (122) au moins dans une deuxième direction (Sx), qui est perpendiculaire à la première direction (Sz), moyennant quoi une troisième direction (Sy) est perpendiculaire à la première direction (Sz) et à la deuxième direction (Sx),
- une largeur (W210) du fond (210) est d'au plus 50 % d'une largeur (W239) de l'intérieur (239) du canal d'entrée (200) ; dans lequel
- les largeurs (W210, W239) sont définies dans la troisième direction (Sy) ;
de préférence,
- le fond (210) du canal d'entrée (200) comprend une partie telle qu'elle a une deuxième normale (N2) qui est orientée vers un intérieur (239) du canal d'entrée (200) et n'a pas de composante dans une troisième direction (Sy), et
- la largeur (W210) du fond est une largeur de la partie du fond (210) ayant la deuxième normale (N2).

5. Cyclone (120) selon l'une quelconque des revendications 1 à 4, dans lequel
- le canal d'entrée (200) s'étend et est configuré pour amener le mélange (M) dans le corps cylindrique (122) au moins dans une/la deuxième direction (Sx), qui est perpendiculaire à la première direction (Sz), moyennant quoi une/la troisième direction (Sy) est perpendiculaire à la première direction (Sz) et à la deuxième direction (Sx),
- le fond (210) du canal d'entrée (200) comprend une partie telle qu'elle a une deuxième normale (N2) qui est orientée vers un intérieur (239) du canal d'entrée (200) et n'a pas de composante dans une troisième direction (Sy), et
- la buse (220) est prévue sur la partie du fond (210) ayant la deuxième normale (N2).

6. Cyclone (120) selon l'une quelconque des revendications 1 à 5, dans lequel
- le canal d'entrée (200) a une entrée (201) pour recevoir le mélange (M) et une sortie (202) débouchant dans un intérieur (123) du corps cylindrique (122) et
- au moins une partie du fond (210) du canal d'entrée (200) est inclinée de telle sorte qu'un matériau se déplaçant le long du fond (210) vers le corps cylindrique (122) se déplace dans une direction (DT) qui a une composante positive dans la première direction (Sz) ;
de préférence,
- le fond (210) du canal d'entrée (200) comprend une partie telle qu'elle a une troisième normale (N3) qui est orientée vers un intérieur (239) du canal d'entrée (200), dans lequel
- la troisième normale (N3) a une première composante dans la première direction (Sz) et une deuxième composante dans la deuxième direction (Sx),
- un vecteur défini par la première composante et la deuxième composante forme un deuxième angle (β) qui est de 135 à 178 degrés.

7. Cyclone (120) selon l'une quelconque des revendications 1 à 6, dans lequel
- la buse (220) est configurée pour amener du gaz au canal d'entrée (200) de telle sorte que l'amenée du gaz améliore l'écoulement du matériau sur le fond (210) du canal d'entrée (200) vers un intérieur (123) du corps cylindrique (122) du cyclone.

8. Cyclone (120) selon l'une quelconque des revendications 1 à 7, dans lequel
- le canal d'entrée (200) s'étend dans une/la deuxième direction (Sx) et est configuré pour amener le mélange (M) dans le corps cylindrique (122) au moins dans la deuxième direction (Sx), la deuxième direction (Sx) étant perpendiculaire à la première direction (Sz),
- le canal d'entrée (200) a une sortie (202) débouchant dans un intérieur (123) du corps cylindrique (122), dans lequel la sortie (202) est agencée à un emplacement tel que
- la deuxième direction (Sx) forme un troisième angle (γ) d'au plus 45 degrés avec une direction tangentielle (Dtan) du corps cylindrique (122), la direction tangentielle (Dtan) étant définie à l'emplacement de la sortie (202).

9. Cyclone (120) selon l'une quelconque des revendications 1 à 8, comprenant
- des parois (230, 231, 232) délimitant un intérieur (239) du canal d'entrée (200), au moins une deuxième paroi (232) des parois (230, 231, 232) étant fixée au corps cylindrique (122) de telle sorte que
- la partie de la deuxième paroi (232) qui est fixée au corps cylindrique (122) a une quatrième normale (N4),
- le corps cylindrique (122) définit un plan tangent (Pt) à l'emplacement où la deuxième paroi (232) est fixée au corps cylindrique (122), et
- le plan tangent (Pt) a la quatrième normale (N4) ;
de préférence en outre,
- le canal d'entrée (200) comprend une/la sortie (202) débouchant dans un/l'intérieur (123) du corps cylindrique (122), la sortie (220) comprenant une partie du fond (210), dans lequel la sortie (202) est agencée à un emplacement tel que
- une distance (La) entre la partie du fond (210) comprise par la sortie (202) et le plan tangent (Pt) est inférieure à une distance (Lb) entre la partie du fond (210) comprise par la sortie (202) et un plan (Pto) qui est parallèle au plan tangent (Pt) et comprend un axe central (O) du corps cylindrique (122).

10. Cyclone (120) selon l'une quelconque des revendications 1 à 9, dans lequel
- le canal d'entrée (200) s'étend et est configuré pour amener le mélange (M) dans le corps cylindrique (122) dans une/la deuxième direction (Sx), qui est perpendiculaire à la première direction (Sz), moyennant quoi une/la troisième direction (Sy) est perpendiculaire à la première direction (Sz) et à la deuxième direction (Sx) et
- le fond (210) du canal d'entrée (200) est sensiblement au centre du canal d'entrée (200) dans la troisième direction (Sy).

11. Cyclone (120) selon l'une quelconque des revendications 1 à 10, dans lequel
- le fond (210) du canal d'entrée (200) comprend des tubes de transfert de chaleur (242) recouverts de mortier (244) ;
de préférence,
- la paroi (231) selon l'une quelconque des revendications 3 à 11, dont au moins une partie a la première normale (N1), comprend des tubes de transfert de chaleur (242) recouverts de mortier (244).

12. Système thermique comprenant
- le cyclone (120) selon l'une quelconque des revendications 1 à 11,
- un réacteur (810) configuré pour produire le mélange (M) du matériau solide (S) et de la substance gazeuse (G), dans lequel
- le réacteur (810) comprend l'un parmi : un foyer (110) d'une chaudière à lit fluidisé circulant, un réacteur de pyrolyse, un réacteur de gazéification et un foyer d'une chaudière à lit fluidisé bouillonnant et
- le système thermique est configuré pour guider le mélange (M) vers le canal d'entrée (200) du cyclone (120).

13. Système thermique selon la revendication 12, comprenant
- un premier canal d'alimentation (820) pour amener du gaz au réacteur (810) du système thermique,
- le premier canal d'alimentation (820) comprenant une première dérivation (825), le système thermique comprenant
- une première conduite (830) pour transporter du gaz de la première dérivation (825) vers la buse (220) ;
de préférence,
- le réacteur (810) est un foyer (110) d'une chaudière à lit fluidisé circulant,
- le premier canal d'alimentation (820) est configuré pour amener de l'air de combustion dans le foyer (110) et
- une partie de l'air de combustion est configurée pour être amenée à la buse (220) par l'intermédiaire de la première dérivation (825) et de la première conduite (830).

14. Système thermique selon la revendication 12 ou 13, comprenant
- une deuxième conduite (840) configurée pour amener une partie de la substance gazeuse (G) séparée par le cyclone (120) aux buses (220).

15. Utilisation du cyclone (120) selon l'une quelconque des revendications 1 à 11 de telle sorte que la première direction (Sz) soit dirigée vers le bas ou utilisation du système thermique selon l'une quelconque des revendications 12 à 14 de telle sorte que la première direction (Sz) du cyclone (120) du système thermique soit dirigée vers le bas.
